# EUROPÄISCHE PATENTANMELDUNG

(11) **EP 1 136 791 A1**
(43) Veröffentlichungstag der Anmeldung: **26.09.2001**
(21) Anmeldenummer: 01103932.8
(22) Anmeldetag: 19.02.2001
(51) Int. Cl.: G01C 21/36

(54) **Verfahren und Vorrichtung zur Darstellung eines geografischen Bildes auf einem Bildschirm**

(30) Priorität: 06.03.2000 DE 10010310
(71) Anmelder: BECKER GmbH, D-76307 Karlsbad (DE)
(72) Erfinder: Bähren, Frank, 76133 Karlsruhe (DE); Becker, Michael, 76661 Philippsburg (DE); Schöpp, Harald, 76275 Ettlingen (DE)
(74) Vertreter: Patentanwälte Westphal, Mussgnug & Partner

(57) **Zusammenfassung**

Die Erfindung betrifft ein Verfahren und Vorrichtung zur Darstellung eines geografischen Bildes auf einen Bildschirm (36) einer Bildschirmeinheit (30), welche über einen Datenbus (3) an einen ersten Rechner (1) angeschlossen ist. Es ist vorgesehen, dass der erste Rechner (3) abstrakte, auf geografischer Grundlage ermittelte Daten (a,c,f) auf dem Datenbus (3) bereitstellt und die Aufbereitung dieser Daten (a,c,f) zur optischen Darstellung eines Bildes am Bildschirm (36) der Bildschirmeinheit (30) in einem in der Bildschirmeinheit (30) vorgesehenem zweiten Rechner (31) erfolgt.

## Beschreibung

Die Erfindung betrifft ein Verfahren und eine Vorrichtung zur Darstellung eines geografischen Bildes auf einen Bildschirm einer Bildschirmeinheit, welche über einen Datenbus an einen ersten Rechner angeschlossen ist gemäß den Oberbegriffen des Anspruchs 1 und 5.

Solche Verfahren werden z.B. bei den bekannten Navigationsgeräte, wie sie zunehmend in Kraftfahrzeugen eingesetzt sind, angewandt. Die Hauptbestandteile eines solchen Navigationsgeräts oder Fahrzeugnavigationssystems sind eine Bedieneinheit zur Start-, Zwischenziel- und/oder Zieleingabe; ein Datenträger für Navigationsdaten, wie z. B. für Informationen zur Darstellung von Straßenkarten; ein Navigationsrechner zur Durchführung der Routenplanung und Zielführung; eine Datenaufbereitungseinheit zur Aufbereitung von Daten in Bildinformationen, wobei die Datenaufbereitungseinheit in der Regel ein Bildspeicher zum Speichern der Bildinformationen enthält und einen Bildschirm bzw. eine Anzeigeeinheit zur Darstellung von Straßenkarten, Positionsinformationen, Zielinformationen usw. Die Kommunikation der einzelnen Komponenten erfolgt über einen Datenbus, der insbesondere auch ein optischer Datenbus sein kann. Häufig weisen solche Navigationsgeräte auch eine Reihe von Sensoren zur Bestimmung der Fahrzeugposition, der Geschwindigkeit der Orientierung usw. auf.

Aus US 5,689,252 ist ein Navigationsgerät bekannt, welches als Zentraleinheit einen Mikrocontroller aufweist. An diesen Mikrocontroller sind eine Dateneingabe, ein GPS-(= Global Positioning-System) Signalempfänger, ein Richtungssensor, ein Entfernungssensor und ein Verkehrsinformationsempfänger angeschlossen. Weiterhin ist ein Datenspeicher angeschlossen, auf dem Informationen über das Straßennetz, insbesondere Straßenkarten, gespeichert sind. Die von diesen Komponenten dem Mikrocontroller zugeführten Daten werden einem Navigationsrechner zur Durchführung der Routenplanung zur Verfügung gestellt. Die so errechneten Daten werden dann auf einem ebenfalls an den Mikrocontroller angeschlossenen Bildschirm angezeigt. Dabei ist zu beachten, dass insbesondere Straßenkarteninformationen nicht direkt angezeigt werden können, sondern zunächst durch eine geeignete Transformation in Bildinformationen umgewandelt werden müssen.

Neuere Systeme geben dem Benutzer die Möglichkeit, den anzuzeigenden Bildausschnitt durch Zoom- oder Scroll-Funktionen frei zu wählen. Weiterhin wird bei solchen Systemen häufig die Richtung und die Bewegung des Fahrzeugs in den auf dem Bildschirm dargestellten Straßenkarten angezeigt. Durch diese sogenannten Benutzeranforderungen (Zoom- oder Scroll-Funktionen) und Systemanforderungen (Fahrzeugbewegung) ändert sich die darzustellende Bildinformation ständig und muß aus geeigneten Straßenkarteninformationen ständig aktualisiert werden.

Die oben angegebene Anordnung herkömmlicher Navigationsgeräte oder Fahrzeugnavigationssysteme erlaubt es, die Straßenkarteninformationen für jede Bilddarstellung einzeln von dem Navigationsrechner abzurufen und in einen Bildspeicher zwischenzuspeichern.

In EP 0 306 088 A1 ist ein Navigationsgerät neuerer Generation beschrieben. Bei diesem Navigationsgerät sind die Einzelkomponenten über einen Datenbus miteinander verbunden. Eine solche Vernetzung ist bei sogenannten vernetzten Fahrerinformationssystemen üblich. Der Vorteil solcher vernetzter Fahrerinformationssysteme liegt darin, dass eine nahezu beliebige Anzahl von Einzelkomponenten über eine Datenbusleitung miteinander verknüpft werden können. So kann beispielsweise der Bildschirm nicht nur zur Anzeige von Navigationsdaten, Straßenkarten etc. verwendet werden, sondern dient beispielsweise auch zur Anzeige eines Defekts oder ähnlichem im Fahrzeug.

Das in EP 0 306 088 A1 beschriebene Navigationsgerät basiert auf einem Datenbus, einem an den Datenbus angeschlossenen Datenspeicher, auf dem eine Vielzahl von Straßenkarten und Navigationsdaten gespeichert sind; einem an den Datenbus angeschlossenen Navigationsrechner zur Routenplanung; einer an den Datenbus angeschlossenen Datenaufbereitungseinheit zur Aufbereitung von Daten in Bildinformationen, wobei die Datenaufbereitungseinheit einen Bildspeicher zum Speichern der Bildinformationen enthält; einem an die Datenaufbereitungseinheit angeschlossenen Bildschirm, auf dem die Bildinformationen darstellbar sind und einem Kommunikationsblock mit einer Bedieneinheit zur Start-, Zwischenziel und/oder Fahrtzieleingabe.

Bei einem solchen System wird jede Bildinformation einer Straßenkarte einzeln in den Bildspeicher geladen. Die Übertragung einer solchen Bildinformation erfolgt stets über die Busleitung. Will nun ein Benutzer beispielsweise die aktuelle Bildschirmdarstellung verändern oder führt die Bewegung des Fahrzeugs dazu, dass sich die Bildinformation ständig ändert, so ist ständig eine Übertragung der Straßenkarteninformation aus dem Datenspeicher in den Bildspeicher notwendig. Für eine Bildschirmdarstellung mit hinreichenden Bildrefreshzyklen wird eine große Bandbreite des Datenbusses notwendig, welche in der Regel nicht vorhanden ist. Des Weiteren wird der Datenbus nahezu ausschließlich für den Bildinformationstransfer benötigt, so dass andere Informationen bzw. Daten nicht oder nur sequentiell in den verbleibenden Zwischenzeiten übertragbar sind.

Des weiteren ist eine ruckelfreie und damit flüssige Bilddarstellung geografischer Inhalte nicht gewährleistet, weil der Bildschirm lediglich die auf dem Datenbus übertragenen Daten darstellt und die Kapazität der zu übertragenen Daten auf dem Bus begrenzt ist. Durch die lediglich beschränkte Kapazität des Busses und der Buslatenzzeiten kommt es z.B. bei Scroll- oder Zoomoperationen zu ruckartigen und damit vom Betrachter als störend empfundenen Bildwechseln. Dies liegt insbesondere daran, daß vom Navigationsrechner die zur Darstellung vorgesehene geografische Karte berechnet wird. Die Daten für die komplett darzustellende Karte werden in ein der Bildschirmoberfläche entsprechendes planares Koordinatensystem übertragen und dann auf dem Datenbus zum Bildschirm gesendet. Am Bildschirm werden die Daten dann dargestellt. Die Bildschirmeinheit arbeitet bei den bisher bekannten System passiv, d.h. es werden nur die empfangenen Daten visualisiert. Eine "intelligente" Bearbeitung der empfangenen Daten erfolgt nicht.

Die Aufgabe der Erfindung besteht darin, ein Verfahren zur Übertragung von geografischer Informationen über ein Bussystem auf einen Bildschirm anzugeben, welches schnelländernde Bildinhalte flüssig darzustellen erlaubt. Des weiteren soll eine Vorrichtung zur Durchführung des Verfahrens angegeben werden.

Diese Aufgabe wird für das Verfahren durch die Merkmale des Anspruchs 1 gelöst.

Die Aufgabe wird für die Vorrichtung wird durch die Merkmale des Anspruchs 6 gelöst.

Vorteilhafte Ausführungen und Weiterbildungen der Erfindung sind in den Unteransprüchen angegeben.

Der wesentliche Gedanke der Erfindung besteht darin, dass auf dem Bus geografische Informationen anhand von auf Basis eines geografischen Koordinatensystems bereitgestellter Daten übertragen werden und die Bildschirmeinheit anhand dieser geografischen Daten den darzustellenden Bildinhalt selbstätig ergänzt. Hierfür ist in der Bildschirmeinheit eine Rechnereinheit samt Speichereinrichtung angeordnet.

Die Bildschirmeinheit kann z.B. selbst einen Straßenkartenspeicher zum Speichern von Straßenkarteninformationen aufweisen. Dieser Straßenkartenspeicher dient dazu bereits vom Navigationsrechner übertragene Informationen zwischenzuspeichern. Diese lokal in der Bildschirmeinheit verfügbaren Informationen stehen bei Bedarf zur Bildschirmdarstellung bereit, ohne dass eine Kommunikation mit dem Navigationsrechner erforderlich ist. Erst wenn Bildinformationen darzustellen sind, welche nur in dem an dem Datenbus angeschlossenen Datenspeicher vorhanden sind, ist ein Zugriff auf den Navigationsrechner und damit den Datenbus notwendig, die dieser mit der Übertragung der benötigten Information beantwortet. Diese neu übertragene Information verdrängt gegebenenfalls die veraltete und nicht mehr benötigte Information aus dem Straßenkartenspeicher der Bildschirmseinheit.

Allgemein wird durch eine Modularisierung eine Erweiterbarkeit oder Austauschbarkeit einzelner Komponenten erleichtert. Ein diesbezügliches Höchstmaß an Flexibilität wird erfindungsgemäß dadurch erreicht, dass der Navigationsrechner und die Bildschirmeinheit als Module ausgebildet sind, die jeweils separate Mikroprozessoren/Rechner aufweisen.

Da die Fahrzeugbewegung üblicherweise kontinuierlich erfolgt, läßt sich durch ein geeignetes Datenmanagement in der Datenaufbereitungseinheit bereits frühzeitig erkennen, welche Straßenkarteninformationen nachfolgend aufgrund der Fahrzeugbewegung benötigt werden wird. Diese können bereits vorausschauend vom Navigationsrechner angefordert werden (Look-Ahead-Prinzip), so dass zu ihrer Übertragung mehr Zeit zur Verfügung steht. Dies führt zu einer weiteren Verringerung des Bandbreitenbedarfs des Datenbusses und damit zu einer entsprechenden Entlastung des Netzwerks.

In einer besonders vorteilhaften Ausführung der Erfindung ist der Datenbus als "Media Oriented Synchronous Transfer"-(MOST) oder als "Multi Media Link" - (MML) Bus ausgeführt.

Solche standardisierten Bussysteme garantieren in Kombination mit dem o. a. modularen Aufbau eine einfache Integrierbarkeit des erfindungsgemäßen Navigationssystems in fast alle gängigen Fahrzeugfabrikate.

In einer vorteilhaften Ausführung der Erfindung ist vorgesehen, dass der Bildschirmeinheit ein oder mehrere Bedienelemente zur Eingabe einer Benutzeranforderung oder zur Änderung der aktuellen Bildinformation aufweist. Dabei ist unerheblich, ob diese Informationen direkt dem Navigationsrechner zugeführt werden oder über den Datenbus.

Weiterhin sieht die Erfindung vor, dass dem Navigationsrechner ein Sensorblock zu einer Positionsdatenerfassung zugeordnet ist. Zur Positionsdatenerfassung ist beispielsweise ein Positionssensor zur Erfassung einer momentanen Ist-Position vorgesehen und/oder ein Richtungssensor zur Erfassung einer momentanen Orientierung des Fahrzeugs, sowie ein Geschwindigkeitssensor und/oder ein Drehratensensor.

Ein Ausführungsbeispiel der Erfindung ist in der Zeichnung dargestellt und wird unten näher beschrieben. Es zeigen:
- Figur 1: ein Ausführungsbeispiel eines erfindungsgemäßen Navigationsgeräts,
- Figur 2: ein Flußdiagramm zur Demonstration einer Verwaltung und Verarbeitung der in dem Karten speicher der Datenaufbereitungseinheit gespeicherten Straßenkarten.

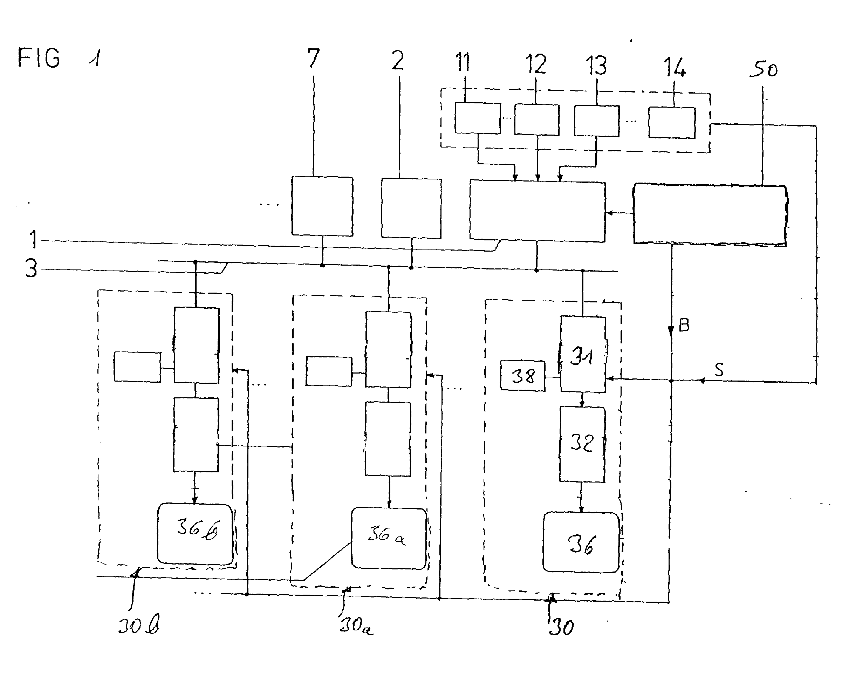

In Fig. 1 ist beispielhaft dargestellt, wie ein Navigationsgerät in einer Datenbusstruktur gemäß der Erfindung realisiert ist. An einen Datenbus 3, z.B. ein optischer Bus (wie z.B. MOST- oder MML-Bus) schließen neben anderen Komponenten 7 ein Navigationsrechner 1, ein Datenspeicher 2 und eine Bildschirmeinheit 30 mit Bedienelementen 32 an. Die Bildschirmeinheit 30 weist einen internen Rechner 31, eine Speicherenrichtung 38 und einen Bildschirm 36 auf.

Dem Navigationsgerät 1 werden Daten zugeführt. Beispielhaft sind ein Geschwindigkeitssensor 11, ein Richtungssensor 12, ein Positionssensor 13 und ein Drehratensensor 14 skizziert. Der Navigationsrechner 1 ist zusätzlich mit einem Massenspeichermedium, z.B. einem CD-Laufwerk 50, in Verbindung, um darauf gespeicherte Straßenkarteninformationen abrufen zu können.

Erfindungsgemäß liegen die Straßenkarteninformationen im Navigationsrechner 1 nicht als planares Koordinatensystem, d.h. übliche Landkarte vor, sondern als geografisches Koordinatensystem. Ein Beipsiel für ein solches geografisches Koordinatensystem ist das WGS 84 - Koordinatensystem. Der Navigationssrechner 1 hat z.B. über den erwähnten Massenspeicher 50 Zugriff auf ein solches geografische Koordinatensystem. Eine auf dem Bildschirm 36 der Bildschirmeinheit 30 dargestellte Landkarte wir dann dadurch generiert, daß der Navigationsrechner lediglich geografische Daten und zuätzliche notwendige Informationen an die Bildschirmeinheit 30 übertragt. Anhand dieser im Vergleich zu den bekannten Übertragungsverfahren reduzierten Datenmenge erzeugt die Bildschirmeinheit 30 das endgültig darzustellende Bild.

Will z.B. ein Autofahrer von dem Ort A nach Ort B fahren, so müssen zunächst die hierfür notwendigen Daten in den Navigationsrechner 1 eingegeben werden. Hierfür dienen die Bedienelemente 32. Sobald der Navigationsrechner 1 durch Kommunikation auf dem Datenbus 3 die Orte A und B weiß, wird der Navigationsrechner 1 die geografischen Daten dieser beiden Orte A und B aus seinem Speicher oder dem erwähnten Massenspeicher 50 abfragen. Zusätzlich wird er die zwischen den Orten A und B befindlichen Straßen ermitteln.

Der Bildschirmeinheit 30 wird der Navigationsrechner 1 dann z.B. folgende Daten a bis f übermitteln, wenn als geografische Daten die Weltkoordinaten verwendet werden:
a: Längen- und Breitengrade zu Ort A,
b: Hinweis, dass zu a ein Ortsymbol gehört,
c: Längen- und Breitengrade zu Ort B,
d: Hinweis, dass zu c ein Ortsymbol gehört,
e: Hinweis, daß zwischen a und c eine Autobahn verläuft,
f: Längen- und Breitengrade des Fahrzeugstandortes,
g: Hinweis, daß zu f ein Fahrzeugsymbol gehört.

Die Bildschirmeinheit 30 wird dann aus diesen Daten a bis g ein Bild erzeugen, indem die über dem Datenbus 3 empfangenen geografischen Koordinaten und die zusätzlichen zu den Koordinaten gehörenden Informationen/Parameter im Rechner 31 der Bildschirmeinheit 30 aufbereitet werden. Zunächst werden am Bildschirm 36 zwei Punkte für die Orte A und B festgelegt. An diesen Punkten werden dann Ortssymbole eingeblendet und anschließend wird die Autobahn zwischen Ort A und B gezeichnet. Schließlich wird noch ein Fahrzeugsymbol an der Stelle des Bildschirms 36 eingeblendet, die der aktuellen Position des Fahrzeuges entspricht. Dies geschieht natürlich so schnell, daß der Betrachter des Bildes den Eindruck hat, daß sämtliche Symbole gleichzeitig am Bild erscheinen. Des weiteren kann der Bildaufbau durch den Rechner 31 in der Bildschirmeinheit 30 auch im Hintergrund laufen und die Darstellung erst erfolgen, wenn das Bild im Rechner der Bildschirmeinheit 30 errechnet ist.

Es ist leicht einzusehen, daß im Vergleich zu herkömmlichen Systemen bei einer Bewegung des Fahrzeuges eine geringere Datenmenge über den Datenbus 3 übertragen werden muß. Der Navigationsrechner 1 teilt lediglich die neuen geografischen Koordinaten des Fahrzeuges mit. Die Einblendung des Fahrzeugsymboles am Bildschirm erfolgt durch den Rechner der Bildschirmeinheit 30 selbst. Eine geringere Busbelastung ist die Folge. Bei den vorbekannten Systemen hätten auf dem Bus darüber hinaus auch die Daten für das Fahrzeugsymbol übertragen werden müssen. Das gleiche gilt selbstverständlich auch für die übrigen am Bildschirm darzustellenden Symbole (Ort, Autobahn, Bundesstraße, Gewässer, Städtenamen, Flüssenamen usw. usw.). Zweckmäßigerweise weist die Bildschirmeinheit 30 einen Speicher auf, in den sämtliche für die Darstellung eines Bildes notwendigen Symbole und Schriftzeichen abgelegt sind.

Im wesentlichen zeichnet sich das erfindungsgemäße Verfahren und die Vorrichtung durch folgende Vorteile aus:
- Verbesserung der bildlichen Darstellung,
- Reduzierung der benötigten Übertragungsbandbreite,
- schnellere Reaktion auf Bedienvorgänge,
- Entkopplung von Navigationsrechner und Bildschirmeinheit,
- Ermöglichung verschiedener Darstellungen zur gleichen Zeit, basierend auf gleiche Daten.

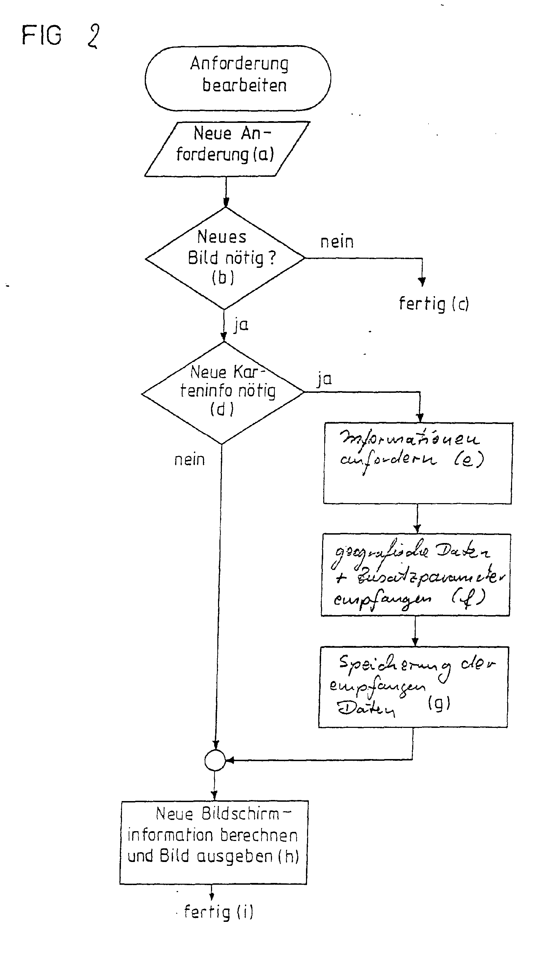

Wie eine solche Anforderung neuer Karteninformation von der Datenaufbereitungseinheit 30 beim Navigationsrechner 1 angefordert werden kann, ist dem in Figur 2 dargestellten Fluss-Diagramm zu entnehmen.

Beim Auftreten einer (a) neuen Anforderung (Benutzeranforderung B und/oder Systemanforderung S) erfolgt zunächst eine Prüfung, ob überhaupt ein neues Bild benötigt wird (b). Weicht zum Beispiel die neue Fahrzeugposition und/oder -Orientierung nur unwesentlich von der aktuellen ab, so ist es bei großem Darstellungsmaßstab gegebenenfalls unnötig, ein neues Bild zu berechnen, da die Unterschiede zum aktuellen im Rahmen der gegebenen Auflösung sowieso nicht sichtbar wären. In diesem Fall ist die Bearbeitung der neuen Anforderung beendet (c) .

Sind die Abweichungen hinreichend groß, um ein neues Bild zu generieren, muß der Rechner 31 in der Bildschirmeinheit 30 prüfen, ob die zur Berechnung der neuen Bildinformation benötigten Informationen im Speicher 38 vorliegen (d). Diese Situation kann z. B. aufgrund früherer Anforderungen B, S auftreten. Ist dies der Fall, so kann die neue Bildinformation sofort berechnet, in Speicher 38 abgelegt und auf dem Bildschirm 36 oder Display angezeigt werden (i) . In diesem Fall ist die Bearbeitung der neuen Anforderungen B, S beendet (c).

Müssen die neuen Karteninformationen erst vom Navigationsrechner 1 geladen und damit über den Datenbus 3 geholt werden, so erfolgt eine Anforderung der benötigten Karteninformation (e) von der Bildschirmeinheit 30 über den Datenbus 3 beim Navigationsrechner 1. Dieser schickt die angeforderten Informationen als geografische Koordinaten mit zusätzlichen, diese geografischen Koordinaten spezifizierenden Paramteren (Ort, Straße, Gewässer usw.) über den Datenbus 3 an den Rechner 36 der Bildschirmeinheit 30. Im Gegensatz zu den vorbekannten Systemen wird die Karteninformationen nicht in ganzen Seiten (ganzen Landkarten) übertragen, sondern lediglich die geografischen Längen- und Breitengrade samt zusätzlicher Parameter. Eine deutlich reduzierte Busbelastung ist die Folge.

Im Rechner 36 der Bildschirmeinheit 30 werden diese Daten empfangen (f) und gespeichert (g).

Jetzt sind alle Karteninformationen, die aufgrund der Anforderung B, S (a) benötigt werden, in der Bildschirmeinheit 30 vorhanden. Die neue Bildinformation kann daraufhin im Rechner 36 der Bildschirmeinheit 30 berechnet, im Speicher 32 abgelegt und auf dem Bildschirm 4 ausgegeben werden (h). Damit ist die Bearbeitung der Anforderung beendet (i).

### Bezugszeichenliste

- 1: Navigationsrechner
- 2: Datenspeicher
- 3: Datenbus

- 7: weitere Komponente

- 11: Geschwindigkeitssensor
- 12: Richtungssensor
- 13: Positionssensor
- 14: Drehratensensor

- 30, 30a, 30b: Bildschirmeinheiten
- 31: Rechner
- 32: Speicher

- 36, 36a, 36b: Bildschirme
- 38: Bedienelemente

- B: Benutzeranforderung
- s: Systemanforderung

- a ... f: geografische Daten, Parameter

## Patentansprüche

1. Verfahren zur Darstellung eines geografischen Bildes auf einen Bildschirm (36) einer Bildschirmeinheit (30), welche über einen Datenbus (3) an einen ersten Rechner (1) angeschlossen ist,
**dadurch gekennzeichnet, dass** der erste Rechner (1) abstrakte, auf geografischer Grundlage ermittelte Daten (a,c,f) auf dem Datenbus (3) bereitstellt und die Aufbereitung dieser Daten (a,c,f) zur optischen Darstellung eines Bildes am Bildschirm (36) der Bildschirmeinheit (30) in einem in der Bildschirmeinheit (30) vorgesehenem zweiten Rechner (31) erfolgt.

2. Verfahren nach Anpruch 1,
**dadurch gekennzeichnet, dass** die abstrakten, auf geografischer Grundlage ermittelten Daten (a,c,f) die Weltkoordinatendaten sind.

3. Verfahren nach Anpruch 1 oder 2,
**dadurch gekennzeichnet, dass** die abstrakten, auf geografischer Grundlage ermittelten Daten (a,c,f) gemäß WGS 84 - Standard gewählt sind.

4. Verfahren nach einem der Anprüche 1 bis 3,
**dadurch gekennzeichnet, dass** vom ersten Rechner (1) zusätzlich zu den abstrakten, auf geografischer Grundlage ermittelten Daten (a,c,f) Parameter (b,d,e,g) bereitgestellt werden, die die abstrakten, auf geografischer Grundlage ermittelten Daten näher spezifiziert.

5. Verfahren nach Anpruch 4,
**dadurch gekennzeichnet, dass** die Parameter (b,d,e,g) kennzeichnen, ob ein Orts-, Gewässer- oder Straßendarstellung oder dgl. erforderlich ist.

6. Vorrichtung zur Darstellung eines geografischen Bildes auf einen Bildschirm (31) einer Bildschirmeinheit (30), welche über einen Datenbus (3) an einen ersten Rechner (1) angeschlossen ist,
**dadurch gekennzeichnet, dass** der erste Rechner (1) zur Bereitstellung abstrakter, auf geografischer Grundlage ermittelter Daten (a,c,f) auf dem Datenbus (3) vorgesehen ist und die Aufbereitung dieser Daten (a,c,f) zur optischen Darstellung eines Bildes am Bildschirm (31) der Bildschirmeinheit (30) in einem in der Bildschirmeinheit (30) vorgesehenem zweiten Rechner (31) vorgesehen ist.

7. Vorrichtung nach Anpruch 6,
**gekennzeichnet durch** die Verwendung in einem Navigationsgerät.

8. Vorrichtung nach Anspruch 7,
**dadurch gekennzeichnet, dass** das Navigationsgerät in einem Kraftfahrzeug angeordnet ist.

9. Vorrichutng nach Anspruch 7 oder 8, **gekennzeichnet durch**:
- einen Datenspeicher (2) auf dem eine Vielzahl von Straßenkarteninformationen und Navigationsdaten gespeichert sind,
- mit einem an den Datenbus (3) angeschlossenen Navigationsrechner (1) zur Routenplanung,
- mit einer an den Datenbus (3) angeschlossenen Bildschirmeinheit (30) zur Aufbereitung von Daten in Bildinformationen, wobei die Bildschirmeinheit (30) einen Speicher (32) zum Speichern der Bildinformationen enthält,
- mit einem an die Bildschirmeinheit (30) angeschlossenen Bildschirm (36), auf dem die Bildinformationen darstellbar sind, sowie mit einer Bedieneinheit (38) zur Start-, Zwischenziel- und/oder Zieleingabe einer Fahrt.

10. Vorrichtung nach einem der Ansprüche 6 bis 9,
**dadurch gekennzeichnet, dass** der Datenbus (3) ein MOST-Bus oder ein MML-Bus ist.

11. Vorrichtung nach einem der Ansprüche 6 bis 10,
**dadurch gekennzeichnet, dass** zwei oder mehrere unabhängige Bildschirmeinheiten (30, 30a, 30b) und Bildschirme (36, 36a, 36b) voneinander unabhängige Kartenausschnitte darstellen.
